# EUROPEAN PATENT SPECIFICATION

(11) **EP 1 500 912 B1**
(45) Date of publication and mention of the grant of the patent: **18.03.2009**
(21) Application number: 04254347.0
(22) Date of filing: 21.07.2004
(51) Int. Cl.: G01F 19/00

(54) **Cup for measuring and dispensing powdered product**
Behälter zur Messung und zum Abgeben eines pulverigen Produktes
Récipient pour la mesure et la distribution d'un produit en poudre

(30) Priority: 23.07.2003 US 625313
(43) Date of publication of application: 26.01.2005
(73) Proprietor: Sonoco Development, Inc., Hartsville, South Carolina 29550 (US)
(72) Inventor: Rea, Keith, Florence, South Carolina 29505 (US)
(74) Representative: Chapman, Paul Gilmour

(56) References cited:
- GB-A- 2 331 289
- US-A- 2 042 945
- US-A- 4 724 615
- US-A- 5 884 523
- US-A- 5 890 627

## Description

### FIELD OF THE INVENTION

The invention relates generally to the precise measurement of powdered ingredients as used in laboratory, cooking, or baking applications.

### BACKGROUND OF THE INVENTION

Powdered or dry ingredients arc used in a variety of applications throughout numerous industries. The practice of accurately measuring and dispensing powdered products requires two essential steps. First, a precise quantity of the powdered ingredient must be collected. Second, the measured powder must be precisely delivered to a mixing area or container without spillage. To accomplish the first step, often a "dry" measuring container, cup or scoop is used that is sized to have a given volumetric capacity when filled up to its top edge or rim. To ensure a proper measurement, the powdered ingredient is "leveled" with the top edge of the cup. This is typically done by overfilling the cup with the powdered ingredient and then running a flat blade over the top edge of the measuring cup, thereby leveling the powdered contents and ensuring the volume of powder matches the capacity of the cup. Dispensing the measured powder is often haphazardly conducted by placing the cup over a mixing area and simply inverting the cup. As a result, the powder is generally transferred to the mixing area; however, significant spillage or clumping of the powder often occurs. Additionally, dispensing a measured ingredient in this way does not accommodate a targeted transfer of the powder into containers having small entry openings such as baby bottles , or the like.

It is desirable then, to produce a measuring and dispensing apparatus that precisely measures powdered ingredients and accurately dispenses those ingredients even into containers having narrow openings. Further, it is desirable that the measuring and dispensing apparatus deposit the powdered ingredients into the container uniformly, so as to avoid clumping of the powder.

GB2031289 describes a dispensing spoon for dispensing powdered material, such as powdered baby milk. The spoon comprises a handle having a scoop at one end and a powder levelling means coupled to the handle, which can be displaced manually for levelling off the contents of the scoop.

US 5 884 523 describes a similar dispensing spoon, where the levelling means comprises a cover ring.

### BRIEF SUMMARY OF THE INVENTION

The present invention addresses the above needs and achieves other advantages by providing an improved apparatus for measuring and dispensing powdered products according to claim 1. The apparatus includes a cup portion and funnel-shaped dispenser portion. The cup holds the powdered material to be measured and is sized to contain a desired volume of powder when filled to its upper edge. The upper edge of the cup has a flat surface to accommodate leveling of the powdered ingredients. The funnel-shaped dispenser has a flat edge at its receiving opening, and thus serves as a leveler when scraped across the cup. The dispenser also facilitates the accurate and uniform transfer of the measured powder into a mixing area. To support these dual functions, the flat edge at the dispenser's receiving opening is sized for engaging the upper edge of the cup so that the cup and dispenser can be abutted with substantially no gap between them.

To use the apparatus of the present invention, the cup portion is overfilled with a powdered ingredient. The funnel-shaped dispenser is then lowered over the overfilled mound of powdered material until the flat edge of the dispenser contacts the upper surface of the cup. When leveling, the dispenser is displaced laterally such that excess powder is removed and that which remains is level with the top surface of the cup portion, thereby producing an accurate measurement. Once a proper measurement of powdered material is obtained, the dispenser is replaced in concentric contact with the top surface of the cup. When dispensing, the apparatus is moved over the mixing area and is inverted. The measured contents are thereby transferred through the funnel-shaped dispenser to the mixing area. The present invention provides significant benefits to users including ensuring accurate measurement by eliminating spillage, reducing clumping, and facilitating the dispensing of powdered ingredients into narrow mixing containers.

The cup portion and the funnel-shaped dispenser each have handle members. The handle members serve to aid in the use and manipulation of the cup/dispenser and arc moveably joined to one another, such as by a pin, ring, or the like.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
**Fig. 1** is a perspective view of a measuring and dispensing apparatus in accordance with one embodiment of the present invention;
**Fig. 2** is a section view of the funnel-shaped dispenser portion of the measuring and dispensing apparatus of **Fig. 1** taken along section line 2-2;
**Fig. 3** is a section view of the cup portion of the measuring and dispensing apparatus of **Fig. 1** taken along section line 3-3;
**Fig. 4** is a perspective view of one embodiment of the measuring and dispensing apparatus of the present invention, illustrating the cup portion over-filled with a powdered ingredient;
**Fig. 5** is a section view illustrating the "leveling" or measuring of a powdered ingredient, wherein the funnel-shaped dispenser is translated laterally over the flat upper surface of the cup portion such that any excess powder is removed;
**Fig. 6** is a section view of a measuring and dispensing apparatus in accordance with the present invention, illustrating the completion of the measuring process wherein the funnel-shaped dispenser is replaced in concentric contact with the cup;
**Fig. 7** is a section view illustrating the dispensing of a powdered ingredient, wherein the measuring and dispensing apparatus is inverted, thereby allowing the measured ingredient to flow through the funnel-shaped dispenser into a narrow mixing container.

The present invention now will be described more fully hereinafter with reference to the accompanying drawings, in which some but not all of the embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

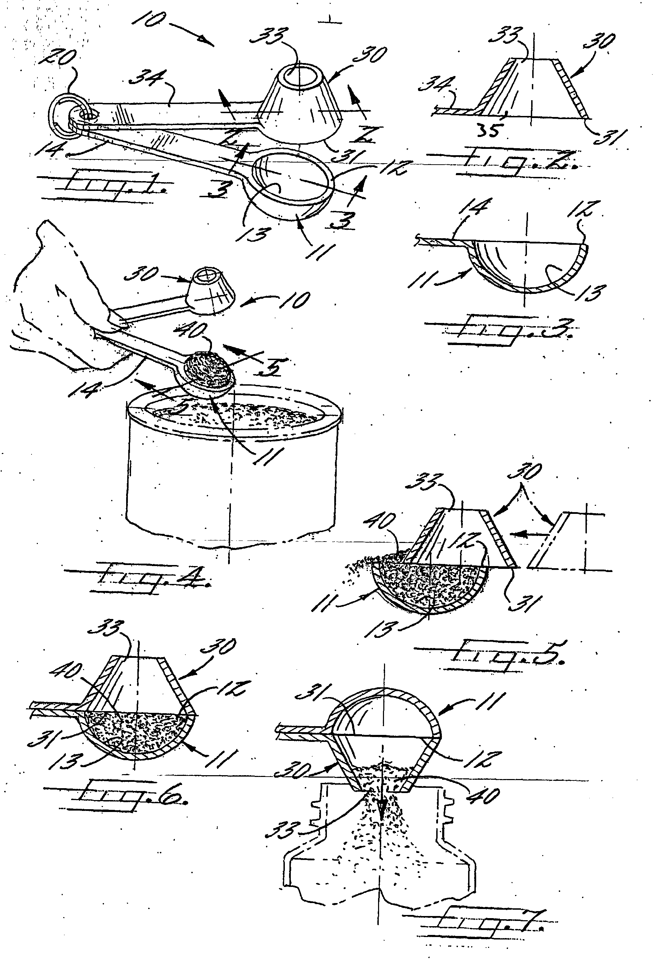

**Fig. 1** illustrates one preferred embodiment of a measuring and dispensing apparatus **10** in accordance with the present invention, having a cup **11** and a funnel-shaped dispenser **30.** **Fig. 1** depicts the cup **11** and funnel-shaped dispenser **30** as having handle members **14, 34**. Such handle members support the convenient use and manipulation of the measuring and dispensing apparatus **10**. They may be connected to one another via a ring (as shown), pin or other similar connection apparatus **20**.

**Fig. 2** provides a section view depicting the funnel-shaped dispenser **30**, wherein the dispenser **30** has a relatively large receiving opening **35** and a relatively smaller exit opening **33**. The perimeter of the receiving opening **35** defines a flat leveling surface **31**. Opposing the flat leveling surface **31**, is the flat upper edge **12** of the cup **11** as shown in **Fig. 3**. The flat leveling surface **31**, and the flat upper edge **12** are sized and shaped to be abutted with one another with substantially no gap therebetween, such that no powder is allowed to escape when the receiving edges of the dispenser **30** and cup **11** are pressed together. Although depicted as semi-circular, the cup **11** may take various shapes (e.g., rectangular, square, triangular, etc.) so long as the cup **11** is ultimately capable of holding a given volume of powder. Additionally, though the flat upper edge **12** of the cup **11** is shown in **Fig. 1** as generally oval in shape, it too may be of various shapes (e.g., rectangular, square, triangular, etc.) so long as the flat leveling surface **31** of the funnel-shaped dispenser **30** is shaped and sized to match as described above.

**Figs. 4, 5, 6** and **7** illustrate the operation of one preferred embodiment of the present invention. Specifically, the cup **11** is over-filled with a powdered ingredient **40** as shown in **Fig. 4**. The powder is then "leveled" as shown in **Fig. 5** by laterally translating the funnel-shaped dispenser **30** over the cup **11**, such that the upper edge **12** of the cup **11** is maintained in intimate contact with the flat leveling surface **31** of the dispenser **30**. Alternatively, the powder may be leveled by lowering the funnel-shaped dispenser **30** over the overfilled mound of powdered material **40** such that the flat leveling surface **31** of the dispenser **30** is placed in concentric contact with the upper surface **12** of the cup **11**. The dispenser **30** may then be translated laterally as described above, such that any excess powder is removed. Once leveled, the funnel-shaped dispenser **30** is replaced in concentric contact with the cup **11** as shown in **Fig. 6**.

Finally, dispensing of the measured powder **40** occurs by inverting the measuring and dispensing apparatus **10**, such that the measured powder **40** flows through the funnel-shaped dispenser **30**. The relatively small exit opening **33** of the funnel-shaped dispenser **30** accommodates a uniform transfer of the powder, even into containers having narrow openings.

Many modifications and other embodiments of the invention set forth herein will come to mind to one skilled in the art to which this invention pertain having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A measuring and dispensing apparatus (10) comprising:
a cup (11) for measuring a powder, the cup having a flat upper edge (12) circumscribing a top opening of the cup wherein the cup is sized to contain a desired volume of powdered ingredients when filled to its upper edge; and a cup handle (14) rigidly contiguous to the flat upper edge; and
a dispenser (30) comprising a flat levelling edge (31), wherein the levelling edge of the dispenser is configured to be scraped across the upper edge of the cup to level a quantity of powder in the cup and remove excess powder such that the powder is even with the upper edge of the cup, and wherein the levelling edge of the dispenser is of the same shape and size as the cup, so as to concentrically abut with the upper edge of the cup with substantially no gap therebetween, wherein the dispenser further comprises a dispenser handle (34) rigidly affixed contiguous to the flat levelling edge;
wherein the measuring and dispensing apparatus further comprises a connection apparatus (30) for movably joining the dispenser handle to the cup handle, **characterised in that** the measuring and dispensing apparatus is arranged so as to permit over-filling of the cup prior to the dispenser being translated or lowered over the cup to place the levelling edge of the dispenser in contact with the upper edge of the cup, and to permit the levelling edge to be scraped across the upper edge of the cup to level a quantity of powder in the cup such that the powder is even with the upper edge of the cup and the levelling edge concentrically abuts the upper edge of the cup, and
the dispenser is a funnel-shaped dispenser for depositing the powder, the dispenser having a receiving opening (35) and an exit opening (33) that is relatively smaller than the receiving opening, wherein the perimeter of the receiving opening defines the flat levelling edge; whereby inverting the measuring and dispensing apparatus causes the powder in the cup to flow out of the cup through the exit opening of the funnel-shaped dispenser.

2. A measuring and dispensing apparatus as recited in Claim 1, wherein the funnel-shaped dispenser is substantially conical.

3. A measuring and dispensing apparatus as recited in Claim 1, wherein the connection apparatus is a pin.

4. A measuring and dispensing apparatus as recited in Claim 1, wherein the connection apparatus is a ring.

## Patentansprüche

1. Mess- und Abgabevorrichtung (10), die Folgendes umfasst:
einen Becher (11) zum Abmessen eines Pulvers, wobei der Becher eine flache Oberkante (12), die eine obere Öffnung des Bechers umschließt, wobei der Becher dafür bemessen ist, ein gewünschtes Volumen von pulverisierten Zutaten zu enthalten, wenn er bis zu seiner Oberkante gefüllt ist, und einen Bechergriff (14), der starr an die flache Oberkante anstößt, hat und
einen Spender (30), der eine flache Nivellierungskante (31) umfasst, wobei die Nivellierungskante des Spenders dafür konfiguriert ist, über die Oberkante des Bechers gestrichen zu werden, um eine Menge an Pulver in dem Becher zu nivellieren und überschüssiges Pulver zu entfernen derart, dass das Pulver auf gleicher Höhe mit der Oberkante des Bechers ist, und wobei die Nivellierungskante des Spenders die gleiche Form und Größe wie der Becher hat, um so konzentrisch, im Wesentlichen ohne Spalt zwischen denselben, an die Oberkante des Bechers anzustoßen, wobei der Spender ferner einen Spendergriff (34) umfasst, der starr anstoßend an die flache Nivellierungskante befestigt ist,
wobei die Mess- und Abgabevorrichtung ferner eine Verbindungsvorrichtung (20) zum beweglichen Verbinden des Spendergriffs mit dem Bechergriff umfasst, **dadurch gekennzeichnet, dass** die Mess- und Abgabevorrichtung so angeordnet ist, dass sie ein Überfüllen des Bechers ermöglicht, bevor der Spender über den Becher verschoben oder abgesenkt wird, um die Nivellierungskante des Spenders in Berührung mit der Oberkante des Bechers zu bringen und zu ermöglichen, dass die Nivellierungskante über die Oberkante des Bechers gestrichen wird, um eine Menge an Pulver in dem Becher zu nivellieren derart, dass das Pulver auf gleicher Höhe mit der Oberkante des Bechers ist und die Nivellierungskante konzentrisch an die Oberkante des Bechers anstößt, und
der Spender ein trichterförmiger Spender zum Absetzen des Pulvers ist, wobei der Spender eine Aufnahmeöffinung (35) und eine Austrittsöffnung (33), die verhältnismäßig kleiner ist als die Aufnahmeöffnung, hat, wobei der Umfang der Aufnahmeöffnung die flache Nivellierungskante definiert, wodurch ein Wenden der Mess- und Abgabevorrichtung bewirkt, dass das Pulver in dem Becher durch die Austrittsöffnung des trichterförmigen Spenders aus dem Becher herausfließt.

2. Mess- und Abgabevorrichtung nach Anspruch 1, wobei der trichterförmige Spender im Wesentlichen kegelförmig ist.

3. Mess- und Abgabevorrichung nach Anspruch 1, wobei die Verbindungsvorrichtung ein Stift ist.

4. Mess- und Abgabevorrichtung nach Anspruch 1, wobei die Verbindungsvorrichtung ein Ring ist.

## Revendications

1. Appareil de mesure et de distribution (10) comprenant :
un récipient (11) pour mesurer une quantité de poudre, le récipient ayant un bord supérieur plat (12) circonscrivant une ouverture supérieure du récipient, le récipient étant dimensionné pour contenir un volume désiré d'ingrédients en poudre lorsqu'il est rempli jusqu'à son bord supérieur ; et une poignée de récipient (14) contiguë de manière rigide au bord supérieur plat ; et
un distributeur (30) comprenant un bord plat d'arasement (31), le bord d'arasement du distributeur étant configuré pour passer au-dessus du bord supérieur du récipient en l'éraflant pour araser une quantité de poudre dans le récipient et éliminer la poudre en excès de sorte que la poudre est au même niveau que le bord supérieur du récipient, le bord d'arasement du distributeur ayant la même forme et la même taille que le récipient, de sorte à venir en appui concentriquement sur le bord supérieur du récipient substantiellement sans laisser d'espace, le distributeur comprenant en outre une poignée de distributeur (34) fixée de manière rigide et contiguë au bord plat d'arasement ;
dans lequel l'appareil de mesure et de distribution comprend en outre un appareil de connexion (20) pour joindre de manière mobile la poignée de distributeur et la poignée du récipient, **caractérisé en ce que** l'appareil de mesure et de distribution est arrangé afin de permettre un sur-remplissage du récipient avant le déplacement par translation ou l'abaissement du distributeur sur le récipient pour mettre le bord d'arasement du distributeur en contact avec le bord supérieur du récipient, et de permettre au bord d'arasement d'être déplacé au-dessus du bord supérieur du récipient en l'éraflant afin d'araser une quantité de poudre dans le récipient de sorte que la poudre est au même niveau que le bord supérieur du récipient et le bord d'arasement vient en appui concentriquement sur le bord supérieur du récipient, et
le distributeur est un distributeur en forme d'entonnoir pour déposer la poudre, le distributeur ayant une ouverture de réception (35) et une ouverture de sortie (33) qui est relativement plus petite que l'ouverture de réception, le périmètre de l'ouverture de réception définissant le bord d'arasement plat ; et où l'inversion de l'appareil de mesure et de distribution entraîne l'échappement hors du récipient de la poudre dans le récipient à travers l'ouverture de sortie du distributeur en forme d'entonnoir.

2. Appareil de mesure et de distribution selon la revendication 1, dans lequel le distributeur en forme d'entonnoir est de forme substantiellement conique.

3. Appareil de mesure et de distribution selon la revendication 1, dans lequel l'appareil de connexion est une goupille.

4. Appareil de mesure et de distribution selon la revendication 1, dans lequel l'appareil de connexion est un anneau.
